# EUROPÄISCHE PATENTSCHRIFT

(11) **EP 1 533 669 B1**
(45) Veröffentlichungstag und Bekanntmachung des Hinweises auf die Patenterteilung: **30.04.2008**
(21) Anmeldenummer: 03026346.1
(22) Anmeldetag: 18.11.2003
(51) Int. Cl.: G05B 19/042, G05B 23/02

(54) **Zustandsüberwachung bei technischen Prozessen**
Condition monitoring of technical processes
Surveillance d'état des processus techniques

(43) Veröffentlichungstag der Anmeldung: 25.05.2005
(73) Patentinhaber: Renner, Peter, 51515 Kürten (DE)
(72) Erfinder: Renner, Peter, 51515 Kürten (DE)
(74) Vertreter: Nau, Walter

(56) Entgegenhaltungen:
- EP-A- 0 229 559
- EP-A- 0 691 631
- EP-A- 1 035 459
- EP-A- 1 403 750
- WO-A-00/33150
- DE-A- 19 856 289
- US-B1- 6 567 709

## Beschreibung

Die Erfindung bezieht sich auf ein System zur Überwachung technischer Prozesse, Maschinen, Anlagen und Apparaten gemäß dem Oberbegriff des Patentanspruchs 1.

Werden Änderungen des Normalzustandes rechtzeitig erkannt, können größere Schäden vermieden werden, indem rechtzeitig Wartungsmaßnahmen vorgenommen werden, bevor größere Schäden verbunden mit längeren Stillstandszeiten eintreten.
Veränderungen an Maschinen, Apparaten und Anlagen werden durch Verschleiß, Korrosion, Ablagerungen, Verstopfung, Verschmutzung und durch unspezifisch auftretende Betriebsstörungen verursacht.

Erste Ansätze zur Überwachung des Maschinenzustandes im Hinblick auf Crashvermeidung und zustandsorientierter Instandhaltung basieren auf komplizierten mathematischen Berechnungen vorzugsweise auf der Basis neuronaler Netze. Sie haben den Nachteil, dass ein sehr hoher Kostenaufwand entsteht, da die jeweilige Anwendung trainiert werden muss. Die erzielten Ergebnisse sind eher dürftig. Auch andere Verfahren lösen nur Teilaspekte und erzielten keinen durchschlagenden Erfolg.

Die Schwierigkeit bei der Beurteilung eines Maschinenzustandes ergibt sich aus folgenden Umständen.

Kleine Veränderungen der Temperaturwerte der Lagerstellen z.B. sind bedeutsam für den Abnutzungsgrad der Lager.
Die Temperaturwerte sind jedoch einer Reihe von betriebsbedingten Einflussfaktoren ausgesetzt. Die Temperaturwerte werden von der Drehzahl, der Radialkraft und durch die Umgebungstemperatur beeinflusst. Es ist daher entsprechend dem Stande der Technik nicht möglich, kleine Veränderungen aufzuspüren, da betriebsbedingte Schwankungen der Messwerte größer sind als die kleinen Veränderungen, die auf den Verschleiß der Lager zurückzuführen sind.

Ein System zur Überwachung von technischen Prozessen, Maschinen, Anlagen, Apparaten oder dergleichen, bei denen Messdaten über Maßkanäle erfasst werden, wobei die Messkanäle Sensoren, Sensorleitungen und eine Überwachungseinheit mit einer Auswerteelektronik und mit einer Software für die Überwachung aufweisen, wobei Mittel vorgesehen sind, die die Messkanäle voneinander abhängiger Messgrößen zu Bezugsgruppen zusammenfassen, ist aus der DE 198 56 289 A bekannt.

Aus der WO 00/33150 A soll durch die Aussortierung von Messwerten sich eine Reduktion hinsichtlich der Anzahl der Messwerte ergeben. Somit liegen hier für eine Weiterverarbeitung eine deutlich reduzierte Anzahl von Messwerten vor. Die Weiterverarbeitung kann mit gegenüber der nicht reduzierten Anzahl von Messwerten geringerem Rechenaufwand erfolgen. Eine Weiterbildung der WO 00/33150 A besteht darin, dass auch die Klassen der Messwerte selbst bewertet werden. Insbesondere kann eine Klasse, deren Bewertung unterhalb eines vorgegebenen zweiten Schwellwertes liegt, aussortiert werden. Hierdurch ergibt sich eine zusätzliche Reduktion der Anzahl der Messwerte. Noch eine Weiterbildung besteht darin, dass ein Kriterium für die Klasseneinteilung darin besteht, dass pro Klasse Messwerte zu einer Vorgabe von Einstellparametern des technischen Systems bestimmt werden. Typischer Weise wird das technische System anhand einer vorgegebenen Anzahl von Einstellparametern eingestellt, wobei nach Einstellung eine zumeist zeitverzögerte Reaktion des Systems auf die Einstellparameter wie Einschwingverhalten, Einschwingvorgang des Systems, erfolgt. Nach der Einstellung werden somit eine bestimmte Menge an Messwerten aufgenommen, die dem Einschwingvorgang zugeordnet werden können, wobei nach abgeschlossenem Einschwingvorgang weiterhin Messwerte anfallen, die dem vorgegebenen Satz Einstellparameter zugeordnet werden. Durch Verstellung der Einstellparameter wird eine neue Klasse bestimmt. Alle Messwerte, die jeweils nach einer Verstellung der Einstellparameter anfallen, gehören in eine eigene Klasse.

Bei der WO 00/33150 A lediglich versucht, die Anzahl der Messwerte für die Weiterverarbeitung zu reduzieren, um mit einem geringeren Rechenaufwand und damit einer schnelleren Verarbeitung der Messwerte auszukommen. Die Aufteilung der Messwerte in Klassen, wie sie in der WO 00/33150 A vorgenommen wird, dient nur der Aussortierung von Messwerten.

Aufgabe der Erfindung ist es, einen Beitrag zu leisten, um Maschinen und Anlagen besser zu nutzen, ihre Standzeit zu erhöhen, die Sicherheit zu verbessern, den Verlust wertvoller Güter zu vermeiden, Versuchsergebnisse zu optimieren und den Einsatz von Energie zu verringern. Eine weitere Aufgabe der Erfindung ist es, drohende Totalausfälle (Crash) rechtzeitig zu erkennen und zu melden. Betriebsstörungen und Störungen der Messtechnik, die sich im Sekunden- oder Minutenbereich abspielen, sollen ebenfalls erkannt werden.

Die Aufgabe wird durch folgende Merkmale des Patentanspruches 1 gelöst. Die vorliegende Problemlösung beruht auf Erkenntnissen der inneren Struktur technischer Prozesse. Die auf Verschleiß, Korrosion, Ablagerungen, Lecks und Ähnlichem beruhenden abnutzungsbedingten dauerhaften Veränderungen werden von den betriebsbedingten Einflüssen, die auf die Maschinen/Anlagen einwirken, getrennt, um dadurch die abnutzungsbedingten dauerhaften Veränderungen freizulegen.
Zuerst werden Bezugsgruppen voneinander abhängiger Messgrößen gebildet. Unter Messgrößen (Messwerte) werden u.a. Temperaturen, Drücke, Durchflüsse, Drehzahlen, Schwingstärken etc. verstanden, die via Messkanäle erfasst werden. Die Messkanäle bilden Messketten, die Sensoren, Leitungen und Messelektronik enthalten. Unter abhängigen Messgrößen (Messwerten) werden solche verstanden, die in einem inneren Zusammenhang bezogen auf die Funktion oder Bauart einer Maschine/Anlage stehen.
Zum Beispiel stehen die Abgastemperaturen mehrerer Zylinder eines Verbrennungsmotors in einem inneren Zusammenhang zueinander. Sie fluktuieren in Abhängigkeit äußerer Parameter, wobei die Fluktuation untereinander in etwa proportional ist. Sie ist geprägt durch Motordrehzahl und Motorleistung.
Bezugsgruppen werden daher aus Kanälen gebildet, die in einem inneren Zusammenhang stehen oder deren Messwerte voneinander abhängig sind. Durch eine dauerhafte Erfassung der Messdaten werden langfristige Veränderungen festgestellt, die den Zustand der Maschine/Anlage repräsentieren.

Weiterhin sieht die Erfindung gemäß den Merkmalen des Patentanspruches 1 vor, die Messkanäle einer Bezugsgruppe in die Kategorien Identkanäle und Zustandskanäle aufzuteilen, wodurch mittels der Identkanäle eine quasi statische Betriebsphase definiert werden kann. Die Zustandskanäle dienen dazu den Zustand der Anlage zu bewerten.

Technische Prozesse tendieren zu einer Art statischer (eingeschwungenen) Betriebsphase. Solche Phasen drücken sich z. B. dadurch aus, dass Betriebstemperatur erreicht ist. Bei Reglern wird durch Veränderung des Sollwertes zuerst eine dynamische, nicht eingeschwungene, Phase eintreten, danach wird sich eine geregelte, quasi statische Betriebsphase (neuer Arbeitspunkt) einstellen. Somit kann ein quasi statische und eine dynamische Phase im Betriebsablauf unterschieden werden.
Quasi statisch deswegen, weil es eine echte statische *Betriebsphase* nicht gibt. In Wirklichkeit wirken ständig weitere Einflussfaktoren, wie wechselnde Belastungen, Umgebungstemperaturen usw. auf die Prozesse ein, sodass eine echte statische *Betriebsphase* nicht existiert.
Die Erfindung kennt daher eine quasi statische und eine dynamische Betriebsphase.

Weiterhin sieht die Erfindung gemäß den Merkmalen des Patentanspruches 1 folgendes vor: Wesentlich für die Erfindung ist, dass nur während der quasi statischen Betriebsphase Messdaten für die Bewertung des Maschinenzustandes genutzt werden. Es werden keine Messdaten zur Bewertung des Maschinenzustandes genutzt, die während des Maschinenstillstandes und der dynamischen Betriebsphase anfallen.
Dadurch entstehen Lücken in einem an sich gewünschten kontinuierlichen Datenstroms durch Maschinenstillstände und durch dynamische Betriebsphasen.

Ein weiterer Erfindungsgedanke besteht darin, diese Lücken durch Dummywerte auszufüllen, wodurch ein quasi kontinuierlicher Strom von Messdaten entsteht. Die Dummywerte werden in Trendcharts besonders (meist grau) gekennzeichnet.

Eine weitere Ausgestaltung der Erfindung ermöglicht es, die quasi statische Betriebsphase zu identifizieren.
Die Identkanäle dienen zur Identifikation der quasi statischen Phase.
Es wird ständig geprüft, ob die quasi statische Phase gegeben ist. Dies geschieht durch Berechnung von Identifizierungsbedingungen, die sich auf die Identkanäle beziehen.
Bei einem geregelten Antrieb können der Sollwert und der Istwert der Drehzahl als Identkanäle definiert werden. Die Bedingung für die quasi statische Phase ist dann gegeben, wenn Sollwert und Istwert übereinstimmen, also wenn der geregelte Zustand eingetreten ist.
Meist sind mehrere Bedingungen, die alle wahr sein müssen, erforderlich. Diese können sein
- Drehzahl größer Null (Maschine läuft)
- Sollwert und Istwert stimmen überein
Bei anderen Anwendungen kann ein Beharrungszustand für die Identifikation der quasi statischen Betriebsphase herangezogen werden. Dieser ist dadurch gekennzeichnet, dass Messwerte, während einer festgelegten Zeit, sich nur innerhalb eines Toleranzbandes bewegen. Eine solche Anwendung kann ein Verbrennungsmotor sein, bei dem geprüft wird, ob die Kühlwassertemperatur in Beharrung ist. Andere Messgrößen, wie die einzelnen Zylindertemperaturen, Abgastemperaturen, Schwingstärke von Lagern dienen als Zustandskanäle, um den Maschinenzustand bewerten zu können.

Schwierigkeiten können sich ergeben, da mannigfaltige Einflüsse während der quasi statischen Betriebsphase auf Prozesse einwirken, die messtechnisch mit normalen Methoden nur schwer erfassbar sind, und die Messwerte der Zustandskanäle so beeinflussen, dass Vergleichswerte nicht verfügbar sind. Z.B. kann sich bei einem Antrieb das Drehmoment unkontrollierbar ändern. Eine Änderung der Umgebungstemperatur kann die Messwerte der Zustandskanäle ebenso beeinflussen.
Die Erfindung macht sich zu nutze, dass viele Prozessparameter miteinander korrelieren oder in einem Bezug zueinander stehen.
Ein Beispiel korrelierender Prozessparameter sind Lager einer mehrfach gelagerten Welle. Ein Beispiel gemeinsamer Bezüge sind Prozessparameter, wie Drücke, Temperaturen, Abgastemperaturen der einzelnen Zylinder bei einem Verbrennungsmotor. Die Zylinder haben eine gleiche Bauweise. Ihre Aufgabe ist es, zu gleichen Anteilen die Abtriebsleistung zu bewerkstelligen. Somit weisen Ihre Messwerte bei korrektem Betrieb gleiche Trends auf.
Solche Prozessparameter, die als Zustandskanäle definiert werden, werden zu Bezugsgruppen zusammengefasst.
Solche Kanäle, die in Bezugsgruppen zusammengefasst werden, zeigen bei normalem ungestörtem Betrieb gemeinsame Tendenzen. Z. B. werden sich die Abgastemperaturen mit der Abtriebsleistung annähernd proportional verändern. Umgekehrt kann darauf geschlossen werden, wenn einer der Zylinder abweichende Werte zeigt, dass eine irgendwie geartete Veränderung vorliegt, ohne dass die Art der Veränderung spezifiziert ist. Solche Veränderungen können sich in einem kurzfristigen, mittelfristigen und langfristigen Zeitraum ereignen.

Um aufgetretene Abweichungen zu spezifizieren, Hinweise auf Betriebsstörungen zu liefern, vor bevorstehenden Totalausfällen zu warnen und Hinweise zu geben, um Wartungsarbeiten durchzuführen, die durch den Zustand der Maschinen/Anlagen bedingt sind, wird in einem weiteren Erfindungsschritt vorgeschlagen, dass die Messwerte der Zustandskanäle der Bezugsgruppen zu statistischen Zustandswerten,
vorzugsweise zu Mittelwerten, verdichtet werden. Als Basis für die Verdichtung dienen eine Auswahl der gebräuchlichen Zeitbereiche oder ein Vielfaches davon wie Sekunden-, Minuten-, Stunden-, Tages-, Wochen-, Monats- oder Jahreswerte.
Dadurch wird es möglich, langsame, mittelschnelle und schnelle Änderungen der Messwerte zu detektieren.
Um die anfallenden Mittelwerte zeitlich zuzuordnen, werden die Werte mit Zeitstempeln versehen. Der Zeitstempel enthält die aktuelle Uhrzeit und das Datum.

In einem weiteren Erfindungsschritt werden die Mittelwerte der einzelnen Zeitreihen zu Prüfblöcken gebündelt, die eine feste Anzahl von Werten enthalten. Diese Prüfblöcke werden gleitend angelegt. Gleitend bedeutet, dass mit jedem neu gebildeten Wert, der älteste Wert entfällt und der neueste hinzukommt.
Die Prüfblöcke werden somit zeitsynchron angelegt, haben die gleiche Länge und sind somit vergleichbar.
Die prozentuale Differenz zwischen dem kleinsten und dem größten Wert eines Prüfblockes ist der Hub. Der Hub und die Kurvenform (Verlauf) werden in den folgenden Auswertungen mit Grenzwerten verglichen und führen beim Überschreiten der Grenzwerte zu Meldungen.
Wenn ein Hub einen Grenzwert überschreitet, wird der Hub mit dem Mittelwert der Hübe der übrigen Prüfblöcke der gleichen Zeitreihe der Bezugsgruppe verglichen. Überschreitet die Differenz einen weiteren Grenzwert so ist eine definitive Abweichung festgestellt und führt zu weiteren Untersuchungen.

Es folgt dann die Überprüfung des Verlaufs des betroffenen Prüfblockes.
Der Verlauf wird auf lineares- und progressives Verhalten hin untersucht, wobei zwischen steigend und fallend unterschieden wird.
Zur Definition der Kurvenform wird die erste und zweite Ableitung herangezogen, wobei Kurvengrenzwerte bestimmen, ob ein linear steigender/fallender, oder ein progressiv steigender/fallender Verlauf vorliegt.

Solche Abweichungen des Hubs und der Kurvenform können in allen Zeitreihen auftreten. Abhängig davon, in welcher Zeitreihe sie auftreten, werden sie unterschiedlich bewertet. Zusätzlich wird ein lineares Verhalten weniger schwerwiegend eingestuft, als ein progressives Verhalten. Abhängig davon, in welchen Zeitreihen Abweichungen auftreten, und ob sie linear oder progressiv sind, führen sie zu Einträgen in Beobachtungslisten, Warnlisten und/oder es werden Alarme ausgelöst.
Alle Parameter sind konfigurierbar und können durch einen Fachmann, der seinen Prozess kennt, festgelegt werden.
Grundsätzlich weisen schnelle Veränderungen im Sekunden- oder Minutenbereich auf Betriebstörungen oder auf Störungen der Messtechnik hin. Mittelschnelle Veränderungen im Minutenbereich und Stundenbereich weisen auf einen bevorstehenden Crash hin, wobei bei einem progressiven Verlauf die Vorhersage verstärkt wird.
Langsame Veränderungen im Tages- und Monatsbereich sind ein Indiz für erforderliche Wartungsarbeiten.
Bei den wartungsbedingten Abweichungen, die bei Tages- und Monatszeitreihen auftreten, entfällt der Vergleich mit den anderen Kanälen der Bezugsgruppe.

Ein Sonderfall des oben beschriebenen Erfindungsgedanken ist dann gegeben, wenn eine Bezugsgruppe aus nur einem Messkanal besteht.
Dies ist dann gegeben, wenn keine korrelierenden anderen Messkanäle verfügbar sind.
In diesem Falle wird wie folgt verfahren. Wird ein Hub festgestellt wird, der einen ersten Grenzwert überschreitet, so wird ein Vergleich mit dem aktuellen Wert der nächst höheren Zeitreihe durchgeführt. Überschreitet der Differenzwert einen zweiten Grenzwert, so wird wie zuvor beschrieben die Kurvenform getestet und entsprechende Ausgaben durchgeführt.
Der Vergleich mit der nächsthöheren Zeitreihe wird bei langsamen Veränderungen im Allgemeinen ab der Tageszeitreihe nicht durchgeführt.
Die verschiedenen Grenzwerte, die den Normalzustand von dem Zustand der Beobachtung und Warnung trennen, können standardmäßig manuell via Bildschirmdialoge eingegeben werden.

In einer weiteren Ausbildung der Erfindung kann ein Lernverfahren angewendet werden. Dies geschieht dadurch, dass im normalen ungestörten Betrieb, während der quasi statischen Betriebsphase permanent Daten erfasst werden, wodurch sich Grenzen (Maxima und Minima) des Normalbetriebs offenbaren. Die Grenzwerte können dann manuell oder automatisch jeweils an den Maximal- und Minimalwerten unter Berücksichtigung eines Sicherheitsabstandes positioniert werden.

Zur weiteren Erläuterung der Erfindung wird auf die Abbildungen verwiesen, in denen Ausführungsbeispiele vereinfacht dargestellt sind.

Es zeigen:

| | |
|---|---|
| **Abbildung 1** | eine schematische Darstellung einer Prozessüberwachung, |
| **Abbildung 2** | eine schematische Darstellung einer 6-fach gelagerten Antriebswelle mit Sensoren zur Erfassung der Lagertemperaturen, mit einer Messeinheit als Interface zwischen dem Prozess und dem PC und einem PC auf dem die beherrschende Software entsprechend der Erfindung installiert ist, |
| **Abbildung 3** | ein Flussdiagramm, das die Funktionsweise der Zustandsüberwachung zeigt, |
| **Abbildung 4** | ein schematisches Trenddiagramm, das ohne Befund ist, |
| **Abbildung 5** | ein schematisches Trenddiagramm mit einem linearen Verlauf der Zustände der Kanäle und |
| **Abbildung 6** | ein schematisches Trenddiagramm, bei dem ein Kanal eine progressive Abweichung zeigt. |

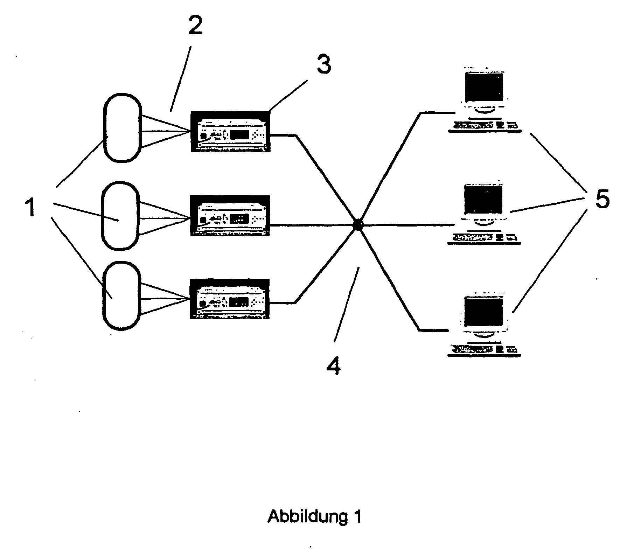

In Abbildung 1 sind bezeichnet mit

| | |
|---|---|
| 1 | Prozesse die überwacht werden, mit |
| 2 | Leitungen als Verbindungen zwischen den Sensoren der Prozesse und Messeinheiten, mit |
| 3 | Messeinheiten als Interfaces zwischen den Prozessen und den PCs, mit |
| 4 | ein Datennetz als Datenverbindung zwischen den Messeinheiten und den PCs und mit |
| 5 | PCs auf denen die überwachende Software installiert ist. |

Die Funktion entsprechend Abbildung 1 ist folgende:
Die Messeinheiten 3 dienen als Interface zwischen den Prozessen 1, deren Zustand zu überwachen ist. In den Prozessen 1 sind Sensoren vorgesehen, die über die Verbindungsleitungen 2 mit den Messeinheiten 3 verbunden sind. Die Messeinheiten 3 sind wiederum über das Datennetzwerk 4 mit PCs 5 verbunden. Somit können analoge und digitale Signale der Sensoren zu den PCs geleitet werden. Auf den PCs 5 ist die beherrschende Software installiert, die die Überwachungsaufgaben in Verbindung mit den Funktionen der Messeinheiten löst.

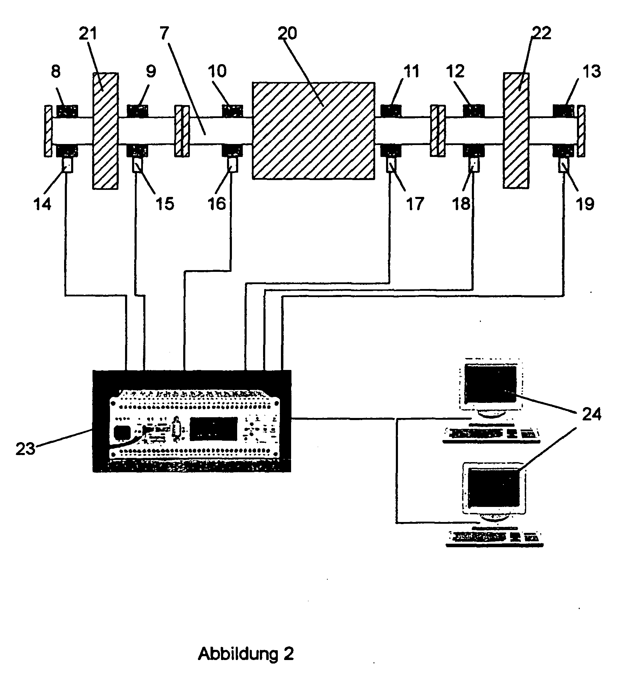

In Abbildung 2 sind bezeichnet mit

| | |
|---|---|
| 7 | eine Antriebswelle, mit |
| 8 bis 13 | Lagerstellen der Antriebswelle, mit |
| 14 bis 19 | Sensoren, die die Temperatur der Lagerstellen erfassen, mit |
| 20 | ein Antriebsmotor, mit |
| 21 und 22 | Zähnräder zum Antrieb angeschlossener Aggregate zum Beispiel Luftverdichter, mit |
| 23 | eine Messeinheit als Interface zwischen den Temperatursensoren und mit |
| 24 | PCs zur Maschinenüberwachung und Prozessführung. |

Die Funktion entsprechend Abbildung 2 ist folgende:
Ein solcher Antrieb kann dazu dienen, über die Zahnräder 21, 22 große Pumpen, Verdichter und ähnliches anzutreiben. Der Elektromotor 20 treibt die Welle 7 an. Die Welle 7 ist durch die Lagerstellen 8, 9, 10, 11, 12, 13 sechsfach gelagert. Die Sensoren 14, 15, 16, 17, 18, 19 dienen dazu die Temperaturen der einzelnen Lagerstellen zu erfassen. Über Leitungen werden die Temperatursignale einem Messinterface 23 zugeführt. Je nach Bauart des Messinterfaces 23 kann es eine Reihe von Aufgaben übernehmen. Wenn der Typ der Temperatursensoren 14, 15, 16, 17, 18, 19 Thermoelemente sind, so liefern diese Millivoltsignale. Das Messinterface 23 formt diese Signale in digitale Messwerte in °C um. Die Temperaturmesswerte gelangen über ein Datennetz an PCs 24. Auf einem dieser PCs 24 ist die beherrschende Software zum Aufspüren von kleinen Veränderungen, in diesem Falle Änderungen an den Temperaturwerten der Lagerstellen 8 bis 13, installiert. Solche Temperaturwerte sind nicht konstant. Sie ändern sich mit der Drehzahl der Welle, der Radialkraft, die auf die einzelnen Lagerstellen 8 bis 13 wirkt und mit der Umgebungstemperatur. Es scheint unmöglich, kleine Veränderungen aufzuspüren, die für den Zustand der Lager 8 bis 13 relevant sind. Kleine Veränderungen der Temperaturwerte der einzelnen Lager 8 bis 13 sind für die zu erwartende Standzeit bedeutsam. Progressive Temperaturänderungen, auch wenn sie gering sind, deuten auf einen baldigen Ausfall des Lagers hin. Bei sprunghaften Veränderungen steht ein Crash unmittelbar bevor. Um kleine Veränderungen aufzuspüren, wird der innere Zusammenhang über die gemeinsame Wellendrehzahl der Welle 7 genutzt.

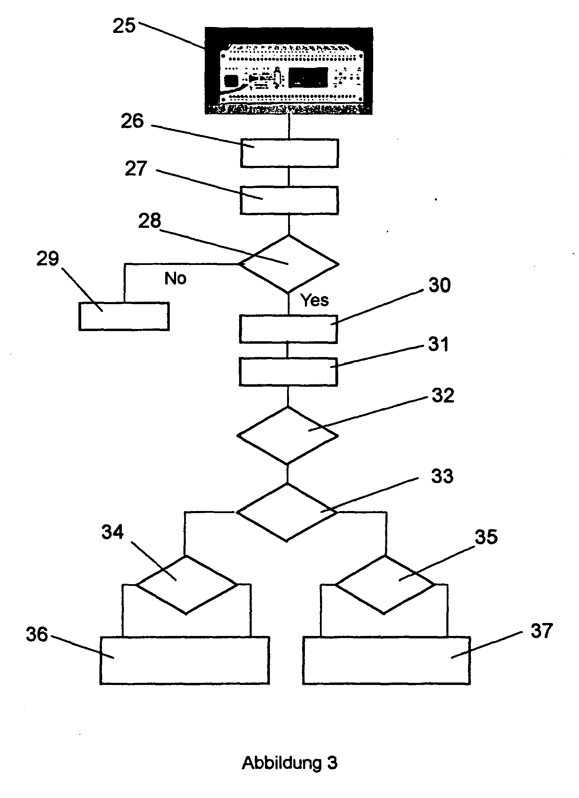

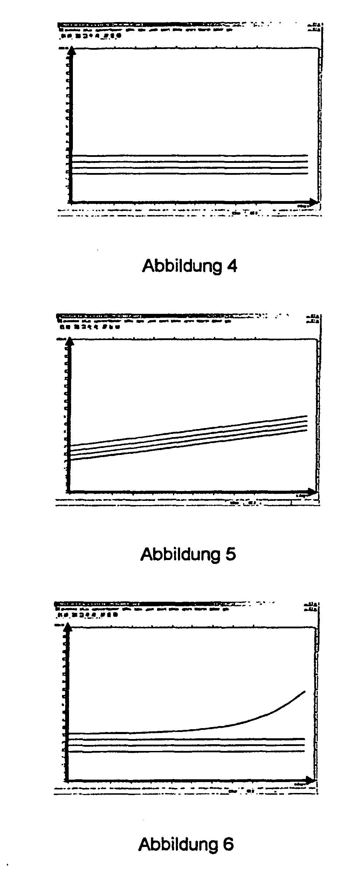

In Abbildung 3 bezeichnen die Bezugszahlen folgende Dinge:

| | |
|---|---|
| 25 | ein Messgerät als Interface zwischen dem Prozess und den PCs; |
| 26 | ein Modul (Messdaten erfassen und gruppieren). Die Messdaten werden vom Interface gelesen und die Messkanäle zu Bezugsgruppen zusammengefasst; |
| 27 | ein Modul, in dem die Kanäle der Bezugsgruppen in Identkanäle und Zustandskanäle aufgeteilt werden; |
| 28 | ein weiteres Modul (Identifikation der quasi statischen Betriebsphase) prüft, ob sich ein Prozess in der quasi statischen Betriebsphase befindet; |
| 29 | ein Modul, das dafür sorgt, dass, wenn in 28 das Ergebnis negativ ist, Dummywerte reale Messwerten in der Messreihe ersetzen; |
| 30 | ein Modul, in dem die Messwerte und die Dummywerte zu statistischen Werten verdichtet werden; |
| 31 | ein Modul, in dem die statistischen Werte der Zeitreihen zu Prüfblöcken zusammengefasst werden; |
| 32 | ein Modul, in dem geprüft wird, ob innerhalb eines Prüfblockes eine prozentuale Veränderung der verdichteten Messwerte vorliegt, die einen Grenzwert übersteigt. Wenn dies der Fall ist, so wird die prozentuale Veränderung dieses Prüfblockes mit dem Mittelwert der Veränderungen der anderen Prüfblöcke verglichen. Übersteigt die Differenz einen Grenzwert so wird in den weiteren Auswertungen die Kurvenform des Prüfblocks geprüft; |
| 33 | ein Modul, in dem geprüft wird, ob die Veränderungen der Werte des Prüfblocks linear oder progressiv erfolgt sind; |
| 34 | ein Modul, in dem geprüft wird, ob es sich um eine aufsteigende oder absteigende Tendenz handelt, wenn die Tendenz linear ist; |
| 35 | ein Modul, in dem geprüft wird, ob es sich um eine aufsteigende oder absteigende Tendenz handelt, wenn die Tendenz progressiv ist; |
| 36 | Beobachtungslisten, die dem Servicepersonal Informationen über sich anbahnende, weniger schwerwiegende Störungen liefern; |
| 37 | Warnlisten, die dem Servicepersonal Informationen über sich anbahnende schwerwiegende Störungen liefern; |

Abbildung 3 zeigt das Ablaufdiagramm bei der Verarbeitung der Daten für eine Bezugsgruppe. Es können gleichzeitig mehrere Bezugsgruppen bearbeitet werden. Das System ist nicht auf Temperaturmessungen beschränkt. Es können zum Beispiel Gruppen für Druckverläufe bei Pumpen und Verdichtern, Durchflüsse von flüssigen oder gasförmigen Medien etc. als Bezugsgruppen vorgesehen werden. Alle verfügbaren Messdaten, die den Einfluss von Verschleiß, Verschmutzung, Korrosion und Betriebsstörungen wiederspiegeln, können in das System aufgenommen werden. Somit erhält der Benutzer ein Gesamtbild des Maschinenzustandes und kann nun den Maschinen/Anlagen Zustand beurteilen. Gemeldete Betriebsstörungen sind aufgrund des aufgetretenen Fehlers stark eingegrenzt. Sich anbahnende Ausfälle (Crash) werden gemeldet. Optimale Zeitpunkte für Wartungsarbeiten, die den Zustand der Anlage widerspiegeln, können vom Servicepersonal festgelegt werden.

Die Funktion entsprechend Abbildung 3 ist folgende:
Das Messgerät 25 dient als Interface zwischen dem Prozess und den PCs. Die Sensorsignale werden hier aufbereitet und in physikalische Größen wie Drücke Temperaturen, Durchflüsse, Schwingstärken umgerechnet. Ferner können Rechenwerte gebildet werden, die ihrerseits als (virtuelle) Messkanäle dienen und den echten Messkanälen gleichwertig sind. Ein einfaches Beispiel wäre eine Differenztemperatur, wo eine möglichst verlustarme Wärmeübertragung stattfinden soll.
Diese Messdaten werden gewandelt und als digitale Informationen via Datennetzwerk an PCs weitergegeben.
Weiterhin könnten die in der Folge beschriebenen Prüfungen und Verarbeitungen der Daten bereits in dem Messgerät 25 ausgeführt werden, wodurch die Aufgabe der PCs auf eine Maschine/Mensch Schnittstelle reduziert wird. Eine solche Lösung ist viel weniger störanfällig, da das Messgerät 25 konstruktiv als Feldgerät konzipiert ist. Ausfälle des Datennetzes und der PCs hätten dann auf die laufenden Überprüfungen keinen unterbrechenden Charakter.

In dem Modul 26 wird dem Planer einer Überwachungseinrichtung für eine spezielle Maschine die Möglichkeit anhand gegeben zusammengehörige Messkanäle zu Bezugsgruppen zusammenzufassen. Als Messkanäle, kurz Kanäle, werden Messketten bezeichnet, die aus Sensoren, Leitungen und einer Messelektronik gebildet werden.
Dabei werden solche Kanäle zu Bezugsgruppen zusammenfasst, deren Messwerte voneinander abhängige Tendenzen zeigen. Solche Messwerte sind zum Beispiel Temperaturen, Drücke, Durchflüsse, Drehzahlen etc. Unter abhängigen Messgrößen werden solche verstanden, die in einem inneren Zusammenhang bezogen auf die Funktion oder Bauart einer Maschine/Anlage stehen.
Zum Beispiel stehen die einzelnen Abgastemperaturen eines großen Dieselmotors mit mehreren Zylindern in einem inneren Zusammenhang.
Sie fluktuieren in Abhängigkeit äußerer Parameter, wobei die Fluktuation in etwa proportional ist. Sie ist geprägt durch Motordrehzahl und Motorleistung.

In dem Modul 27 werden die Kanäle der Bezugsgruppe in Identkanäle und Zustandskanäle aufgeteilt.
Die Identkanäle dienen dazu die quasi statische Betriebsphase zu identifizieren. Bei dem Dieselmotor kann die Temperatur des Kühlwassers herangezogen werden. Dabei kann so vorgegangen werden, dass ein Beharrungszustand ermittelt wird. Dieser ist dadurch gekennzeichnet, dass während einer bestimmten Zeit die Wassertemperatur nur innerhalb eines Toleranzbandes schwanken darf.
Somit kann die quasi statische Betriebsphase dadurch identifiziert werden, dass der Motor läuft und die Kühlwassertemperatur während 10 Minuten innerhalb von 4 °C konstant bleibt.
Die Zustandskanäle der Bezugsgruppe definieren den Zustand der Anlage bzw. eines Anlageteils. Bei der Überwachung des Motors können die Abgastemperaturen, die Zylinderdrücke und Zylinderkopftemperaturen herangezogen werden.

Im Modul 28 wird geprüft, ob der Prozess sich in der quasi statischen Betriebsphase oder in einem nicht eingeschwungenen, dynamischen Zustand befindet. Die Identifizierungsbedingungen werden laufend geprüft. Nur wenn das Ergebnis wahr ist, werden die Messwerte für weitere Untersuchungen zugrunde gelegt.

Der Modul 29 wird abgearbeitet, wenn das Ergebnis der Prüfung des Moduls 28 unwahr ist und somit der dynamische Zustand herrscht. Im Modul 29 werden Dummywerte in die Messreihen anstelle von realen Messwerten eingesetzt. Somit werden die Zeiten dynamischer Zustände mit Dummywerten überbrückt. Die Dummywerte übernehmen den Wert des zuletzt gemessenen realen Messwertes. Durch die Dummywerte sieht ein Betrachter von Trendcharts einen quasi kontinuierlichen Datenstrom wobei die Zeiten, dynamischer Zustände und Stillstände gesondert gekennzeichnet sind.

Im Modul 30 werden die Messwerte einbegriffen die Dummywerte zu statistischen Werten (Mittelwerten) verdichtet.
Somit verfügt die weitere Auswertung über Sekunden-, Minuten-, Stunden-, Tages- und Wochenmittelwerte, die statistische Zeitreihen bilden.

Im Modul 31 werden die Mittelwerte der Zeitreihen zu Prüfblöcken zusammengefasst. Ein solcher Prüfblock hat eine feste Anzahl von Mittelwerten. Bei den weiteren Prüfungen werden die Prüfblöcke als ganzes betrachtet. Die Prüfblöcke werden gleitend angelegt. Dies bedeutet, dass der älteste Wert aus dem Prüfblock ausscheidet und der neueste Wert hinzukommt. Die Mittelwerte werden in Prozentwerte umgerechnet, um Prüfblöcke unterschiedlicher Kanäle miteinander vergleichen zu können.

Im Modul 32 wird geprüft, ob innerhalb eines Prüfblockes eine prozentuale Veränderung der verdichteten Messwerte vorliegt. Die prozentuale Veränderung in einem Prüfblock wird als Hub bezeichnet.
Übersteigt der Hub einen Grenzwert, so wird der Hub mit dem Mittelwert der Hübe der anderen Prüfblöcke (Kanäle) verglichen. Übersteigt die Differenz einen Grenzwert, so wird in den weiteren Auswertungen die Kurvenform des Prüfblockes geprüft. Bleibt dagegen die Differenz unter dem Grenzwert, so erfolgen keine weiteren Prüfungen.

Im Modul 33 wird geprüft ob die Veränderungen der Werte des Prüfblocks linear oder progressiv erfolgt sind. Dies geschieht mathematisch mit Hilfe der zweiten Ableitung. Tangiert oder übersteigt die zweite Ableitung einen Grenzwert, so wird die Kurve der Messwerte des Prüfblocks als progressiv bewertet. Bleibt der Wert der zweiten Ableitung unter dem Grenzwert, so wird die Kurve als linear bewertet. Progressive Veränderungen werden als sehr viel schwerwiegender eingestuft als lineare Veränderungen und führen in der Folge zu unterschiedlichen Wamhinweisen an das Servicepersonal.

Der Modul 34 wird aufgerufen, wenn die Kurventendenz linear ist. Hier wird untersucht, ob es sich um eine linear verlaufende aufsteigende oder absteigende Tendenz handelt. Zur Einkreisung eines Schadens kann es vorteilhaft sein, zu wissen, ob der Messwert, der aus dem Ruder gelaufen ist, steigende oder fallende Tendenz aufweist. Zum Beispiel weist eine steigende Temperatur eher auf einen sich anbahnenden Schaden hin. Dagegen, wenn die Tendenz fallend ist, könnte dies auf eine Störung eines Sensors hinweisen. Solche linearen Störungen führen zu Eintragungen in Beobachtungslisten 36, da sie als weniger schwerwiegend eingestuft werden.

Der Modul 35 wird aufgerufen, wenn die Kurventendenz progressiv ist. Hier wird untersucht, ob es sich um eine progressiv verlaufende aufsteigende oder absteigende Tendenz handelt. Zur Einkreisung eines Schadens kann es vorteilhaft sein, zu wissen, ob der Messwert, der aus dem Ruder gelaufen ist, steigende oder fallende Tendenz aufweist. Zum Beispiel weist eine progressiv steigende Temperatur auf einen bevorstehenden Crash hin. Solche progressiven Verhaltensweisen führen zu Eintragungen in Wamlisten 37.

Die Einträge in Beobachtungslisten 36 und in Wamlisten 37 haben feste und individuell konfigurierbare Bestandteile. Für die Prognose aufgetretener Abweichungen sind eine Reihe von Faktoren maßgebend wie der Verlauf (Kurvenform), die Messgröße, die die Abweichung verursacht, und die Zeitreihe.

Es ist ein sehr großer Unterschied, ob sich eine Abweichung im Sekundenbereich oder bei Wochenmittelwerten zeigt.
Abweichungen im Sekundenbereich zeigen plötzlich auftretende Betriebsstörungen an.
Abweichungen im Stunden- und Tagesbereichbereich vor allen, wenn sie progressiv sind, lassen einen bevorstehenden Crash befürchten.
Abweichungen im Wochenbereich weisen auf natürlichen Verschleiß hin.

## Patentansprüche

1. System zur Überwachung von technischen Prozessen (1), Maschinen, Anlagen, Apparaten oder dergleichen, bei denen Messdaten über Messkanäle erfasst werden, wobei die Messkanäle Sensoren, Sensorleitungen(2) und eine Überwachungseinheit (5) mit einer Auswerteelektronik und mit einer Software für die Überwachung aufweisen, wobei Mittel (26) vorgesehen sind, die die Messkanäle voneinander abhängiger Messgrößen zu Bezugsgruppen zusammenfassen, **dadurch gekennzeichnet, dass** Mittel (27) vorgesehen sind, die die Messkanäle in eine erste Kategorie zur Definition einer quasi statischen Betriebsphase und in eine weitere Kategorie aufteilen, deren Messdaten nach Berechnungs- und Vergleichsprozeduren Auskunft über den Zustand der zugrunde liegenden Prozesse liefern, und weiterhin Mittel (28) vorgesehen sind, mit denen die quasi statische Betriebsphase durch Identifizierungsbedingungen definiert wird, wobei die quasi statische Betriebsphase gegeben ist, wenn die Identifizierungsbedingungen erfüllt sind.

2. System zur Überwachung nach Anspruch 1, **dadurch gekennzeichnet, dass** Lücken, die durch Stillstandszeiten und Zeiten der nicht quasi statischen Betriebsphase entstehen durch Dummywerte ausgefüllt werden (Modul 29).

3. System zur Überwachung nach einem der vorhergehenden Ansprüche, **dadurch gekennzeichnet, dass** während der Laufzeit eines Prozesses ständig überprüft wird, ob die Identifizierungsbedingungen erfüllt sind (Modul 28).

4. System zur Überwachung nach einem der vorhergehenden Ansprüche,
**dadurch gekennzeichnet, dass** zur Identifizierung der quasi statischen Betriebsphase analoge Messdaten, binäre Daten sowie Maschinenlaufzeiten zu wahr/unwahr Verknüpfungen herangezogen werden.

5. System zur Überwachung nach einem der vorhergehenden Ansprüche, **dadurch gekennzeichnet, dass** die Überwachung des Maschinenzustandes nur während der quasi statischen Betriebsphase erfolgt.

6. System zur Überwachung nach einem der vorhergehenden Ansprüche, **dadurch gekennzeichnet, dass** die Messwerte der Zustandskanäle der Bezugsgruppen zu statistischen Werten, vorzugsweise Mittelwerten, verdichtet werden (Modul 30).

7. System zur Überwachung nach einem der vorhergehenden Ansprüche, **dadurch gekennzeichnet, dass** die statistischen Zustandswerte mit Zeitstempeln versehen werden.

8. System zur Überwachung nach einem der vorhergehenden Ansprüche, **dadurch gekennzeichnet, dass** die statistischen Zustandswerte der einzelnen Zeitreihen zu Prüfblöcken gebündelt werden (Modul 31), die eine feste Anzahl von Werten enthalten.

9. System zur Überwachung nach einem der vorhergehenden Ansprüche, **dadurch gekennzeichnet, dass** die Prüfblöcke gleitend angelegt werden (Modul 31), wodurch der älteste Wert entfällt und der neueste hinzukommt.

10. System zur Überwachung nach einem der vorhergehenden Ansprüche, **dadurch gekennzeichnet, dass** der Hub mit einem Grenzwert verglichen wird (Modul 32), und dass bei Überschreitung der Hub mit dem Mittelwert der Hübe der übrigen Prüfblöcke der gleichen Zeitreihe der Bezugsgruppe verglichen wird und bei Überschreitung eines weiteren Grenzwertes die Kurvenform überprüft wird.

11. System zur Überwachung nach einem der vorhergehenden Ansprüche, **dadurch gekennzeichnet, dass**, wenn eine Bezugsgruppe aus nur einem Messkanal besteht, der Hub mit einem Grenzwert verglichen wird (Modul 32).

12. System zur Überwachung nach einem der vorhergehenden Ansprüche, **dadurch gekennzeichnet, dass** ein weiterer Vergleich mit dem Hub des Prüfblockes der nächst höheren oder noch höheren Zeitreihe durchgeführt wird (Modul 32) und bei Überschreiten eines Grenzwertes die Kurvenform überprüft wird, wenn der Grenzwert überschritten wird.

13. System zur Überwachung nach einem der vorhergehenden Ansprüche, **dadurch gekennzeichnet, dass** zur Definition der Kurvenform die erste und zweite Ableitung herangezogen werden (Modul 33), wobei Grenzwerte der Ableitungen bestimmen, ob ein lineares oder ein progressives Verhalten vorliegt.

14. System zur Überwachung nach einem der vorhergehenden Ansprüche, **dadurch gekennzeichnet, dass** die Kurvenform auf linear geneigt aufwärts oder abwärts und progressiv aufwärts oder abwärts untersucht wird.

15. System zur Überwachung nach einem der vorhergehenden Ansprüche, **dadurch gekennzeichnet, dass** das Überschreiten von Grenzwerten je nach schwere der festgestellten Störungen, Einträge in Beobachtungslisten (Module 34, 36), Warnlisten (Module 35, 37) oder Alarme ausgelöst werden.

16. System zur Überwachung nach einem der vorhergehenden Ansprüche, **dadurch gekennzeichnet, dass** lineare Veränderungen weniger schwerwiegend eingestuft werden als progressive Veränderungen.

17. System zur Überwachung nach einem der vorhergehenden Ansprüche, **dadurch gekennzeichnet, dass** im normalen ungestörten Betrieb, eine Lernphase vorgesehen ist, wobei während dieser und der quasi statischen Betriebsphase permanent Daten erfasst werden, wodurch die Grenzen des normalen Betriebes sich offenbaren und die Grenzwerte automatisch jeweils an den Maximal- und Minimalwerten unter Berücksichtigung eines Sicherheitsabstandes positioniert werden können.

## Claims

1. System for monitoring technical processes (1), machines, plants, apparatuses or the like in which measured data are acquired via measuring channels, the measuring channels having sensors, sensor lines (2) and a monitoring unit (5) with an evaluation electronic system and with software for the monitoring, means (26) being provided which combine the measuring channels of mutually dependent measured variables to form reference groups, **characterized in that** means (27) are provided which divide the measuring channels into a first category for defining a quasi-static operating phase and into a further category whose measured data supply information on the state of the fundamental processes after calculation and comparison procedures, and means (28) are also provided with the aid of which the quasi-static operating phase is defined by identification conditions, the quasi-static operating phase being obtained when the identification conditions are fulfilled.

2. System for monitoring according to Claim 1, **characterized in that** gaps which arise owing to downtimes and times of the non-quasi-static operating phase are filled by dummy values (module 29).

3. System for monitoring according to one of the preceding claims, **characterized in that** a check is made during the runtime of a process as to whether the identification conditions are constantly fulfilled (module 28).

4. System for monitoring according to one of the preceding claims, **characterized in that** analogue measured data, binary data and machine runtimes are used in relation to true/false combinations in order to identify the quasi-static operating phase.

5. System for monitoring according to one of the preceding claims, **characterized in that** the monitoring of the machine state is performed only during the quasi-static operating phase.

6. System for monitoring according to one of the preceding claims, **characterized in that** the measured values of the state channels of the reference groups are compressed to form statistical values, preferably mean values (module 30).

7. System for monitoring according to one of the preceding claims, **characterized in that** the statistical state values are provided with time stamps.

8. System for monitoring according to one of the preceding claims, **characterized in that** the statistical state values of the individual time series are bundled to form test blocks (module 31) which contain a fixed number of values.

9. System for monitoring according to one of the preceding claims, **characterized in that** the test blocks are applied in a sliding fashion (module 31) as a result of which the oldest value is eliminated and the newest is added.

10. System for monitoring according to one of the preceding claims, **characterized in that** the range is compared with a limiting value (module 32), and **in that** upon overshooting, the range is compared with the mean value of the ranges of the remaining test blocks of the same time series of the reference group and the curved shape is checked upon overshooting of a further limiting value.

11. System for monitoring according to one of the preceding claims, **characterized in that** the range is compared with a limiting value (module 32) when a reference group consists of only one measuring channel.

12. System for monitoring according to one of the preceding claims, **characterized in that** a further comparison with the range of the test block of the next higher or yet higher time series is carried out (module 32), and upon overshooting of a limiting value the curved shape is checked when the limiting value is overshot.

13. System for monitoring according to one of the preceding claims, **characterized in that** the first and second derivatives are used to define the curved shape (module 33), limiting values of the derivatives determining whether a linear or a progressive response is present.

14. System for monitoring according to one of the preceding claims, **characterized in that** the curved shape is examined for linearly inclined upwards or downwards and for progressively upwards or downwards.

15. System for monitoring according to one of the preceding claims, **characterized in that** depending on the severity of the disturbances determined, entries in observation lists (modules 34, 36), warning lists (modules 35, 37) or alarms are initiated upon overshooting of limiting values.

16. System for monitoring according to one of the preceding claims, **characterized in that** linear variations are classed as less severe than progressive variations.

17. System for monitoring according to one of the preceding claims, **characterized in that** a learning phase is provided in normal undisturbed operation, permanent data being acquired during said learning phase and the quasi-static operating phase, as a result of which the limits of the normal operation are revealed and the limiting values can automatically respectively be positioned at the maximum and minimum values while taking account of a safety clearance.

## Revendications

1. Système de surveillance de processus techniques (1), machines, installations, appareils et similaires, avec lequel des données de mesure sont acquises par le biais de canaux de mesure, les canaux de mesure présentant des capteurs, des lignes de capteur (2) et une unité de surveillance (5) avec une électronique d'interprétation et avec un logiciel pour la surveillance, des moyens (26) étant prévus qui regroupent en groupes de référence les canaux de mesure des grandeurs de mesure dépendantes les unes des autres des, **caractérisé en ce que** des moyens (27) sont prévus, lesquels distribuent les canaux de mesure en une première catégorie pour définir une phase de fonctionnement quasi-statique et en une autre catégorie, dont les données de mesure délivrent, après des procédures de calcul et de comparaison, un renseignement sur l'état des processus servant de base, et des moyens (28) sont en plus prévus, lesquels permettent de définir la phase de fonctionnement quasi-statique par des conditions d'identification, la phase de fonctionnement quasi-statique étant présente lorsque les conditions d'identification sont remplies.

2. Système de surveillance selon la revendication 1, **caractérisé en ce que** les espaces vides qui sont produits par les périodes d'arrêt et les périodes en phase de fonctionnement non quasi-statique sont comblés par des valeurs fictives (module 29).

3. Système de surveillance selon l'une des revendications précédentes, **caractérisé en ce qu'**il est constamment vérifié pendant l'exécution du processus si les conditions d'identifications sont remplies (module 28).

4. Système de surveillance selon l'une des revendications précédentes, **caractérisé en ce que** des données de mesure analogiques, des données binaires ainsi que des temps de cycle machine sont utilisés en combinaisons logiques vrai/faux pour l'identification de la phase de fonctionnement quasi-statique.

5. Système de surveillance selon l'une des revendications précédentes, **caractérisé en ce que** la surveillance de l'état de la machine n'a lieu que pendant la phase de fonctionnement quasi-statique.

6. Système de surveillance selon l'une des revendications précédentes, **caractérisé en ce que** les valeurs mesurées des canaux d'état des groupes de référence sont condensées en valeurs statistiques, de préférence en valeurs moyennes (module 30).

7. Système de surveillance selon l'une des revendications précédentes, **caractérisé en ce que** les valeurs d'état statistiques sont munies de chronotimbres.

8. Système de surveillance selon l'une des revendications précédentes, **caractérisé en ce que** les valeurs d'état statistiques des séries de temps individuelles sont regroupées en blocs de contrôle (module 31) qui contiennent un nombre fixe de valeurs.

9. Système de surveillance selon l'une des revendications précédentes, **caractérisé en ce que** les blocs de contrôle sont créés de manière glissante (module 31), la valeur la plus ancienne étant ainsi supprimée et la plus récente rajoutée.

10. Système de surveillance selon l'une des revendications précédentes, **caractérisé en ce que** l'excursion est comparée avec une valeur limite (module 32) et qu'en cas de dépassement, l'excursion est comparée avec la valeur moyenne des excursions des autres blocs de contrôle de la même série de temps du groupe de référence et la forme de la courbe est contrôlée en cas de dépassement d'une autre valeur limite.

11. Système de surveillance selon l'une des revendications précédentes, **caractérisé en ce que** lorsqu'un groupe de référence ne se compose que d'un seul canal de mesure, l'excursion est comparée avec une valeur limite (module 32).

12. Système de surveillance selon l'une des revendications précédentes, **caractérisé en ce qu'**une autre comparaison avec l'excursion du bloc de contrôle de la série de temps immédiatement supérieure ou encore supérieure est effectuée (module 32) et, en cas de dépassement d'une valeur limite, la forme de la courbe est contrôlée au moment du dépassement de la valeur limite.

13. Système de surveillance selon l'une des revendications précédentes, **caractérisé en ce que** la première et la deuxième dérivées sont utilisées pour la définition de la forme de la courbe (module 33), les valeurs limites des dérivées définissant s'il existe un comportement linéaire ou progressif.

14. Système de surveillance selon l'une des revendications précédentes, **caractérisé en ce que** la forme de la courbe est examinée pour vérifier si elle présente une tendance linéaire vers le haut ou vers le bas ou une tendance progressive vers le haut ou vers le bas.

15. Système de surveillance selon l'une des revendications précédentes, **caractérisé en ce que** les dépassements de valeurs limites sont provoqués en fonction de la gravité des défauts constatés, des entrées dans les listes d'observation (modules 34, 36), de listes d'alerte (modules 35, 37) ou d'alarmes.

16. Système de surveillance selon l'une des revendications précédentes, **caractérisé en ce que** les variations linéaires sont classées moins graves que les variations progressives.

17. Système de surveillance selon l'une des revendications précédentes, **caractérisé en ce qu'**une phase d'apprentissage est prévue pendant le fonctionnement normal sans perturbation, des données permanentes étant acquises pendant celle-ci et pendant la phase de fonctionnement quasi-statique, ce qui dévoile les limites du fonctionnement normal et permet de positionner automatiquement les valeurs limites à chaque fois sur les valeurs maximales et minimales en tenant compte d'une marge de sécurité.
